# EUROPEAN PATENT SPECIFICATION

(11) **EP 2 947 716 B1**
(45) Date of publication and mention of the grant of the patent: **28.06.2023**
(21) Application number: 14425062.8
(22) Date of filing: 23.05.2014
(51) Int. Cl.: H01Q 13/02, H01Q 19/08, B61L 29/30, G01S 7/03, G01S 13/931

(54) **Radar obstacle detector for a railway crossing**
Radarhindernisdetektor für eine Schienenkreuzung
Détecteur d'obstacle de radar pour croisement ferroviaire

(43) Date of publication of application: 25.11.2015
(73) Proprietor: ECM S.P.A., 51034 Serravalle Pistoiese (PT) (IT)
(72) Inventor: Albani, Matteo, 50126 Firenze (IT); Mazzinghi, Agnese, 51031 Agliana (Prov. of Pistoia) (IT); Freni, Angelo, 50131 Firenze (IT)
(74) Representative: Modiano, Micaela Nadia

(56) References cited:
- WO-A1-00/01031
- DE-A1- 3 130 209
- US-A- 2 467 578
- US-A- 2 719 230
- US-A- 3 914 765
- US-A1- 2006 028 356
- US-A1- 2012 286 103

## Description

### Technical Field

This disclosure relates to the field of scanning devices that scan objects at a railway crossing. In particular, this disclosure relates to a radar obstacle detector that emits microwave signals.

### Background

Radar obstacle detectors are generally used to detect objects within an area under surveillance. The radar obstacle detectors may be used at railway crossings to detect an intrusion onto the rail tracks after the rail crossing barriers have been closed when an approaching train is detected.

Radar obstacle detectors may rely on reflectors that reflect frequency-modulated radar signals and utilize the frequency and amplitude differences between the transmitted and reflected signals to determine the presence of an object in the surveillance area. Other radar obstacle detectors may use transmitter and receivers that are responsive to the reflections of signals from the objects and do not utilize a reflector or detect the presence of a signal from the reflector.

The radar obstacle detectors may emit microwave signals which can be emitted non-continuously or continuously. Non-continuously emitted signals are for example microwave pulses. Radar level sensors emitting continuously microwaves are known as FMCW (frequency modulated continuous wave)-radar level sensors. Radar signals emitted from radar obstacle detectors may have antennas. The radar obstacle detector may have horn antennas to direct the signals in a beam.

The present disclosure is directed, at least in part, to improving or overcoming one or more aspects of the prior art system.

### Brief Summary of the Invention

The present disclosure describes a radar obstacle detector for a railway crossing as defined in claim 1.

### Brief Description of the Drawings

The foregoing and other features and advantages of the present disclosure will be more fully understood from the following description of various embodiments, when read together with the accompanying drawings, in which:
Fig. 1 is an exploded view of a radar obstacle detector according to the present disclosure;
Fig. 2 is a front view of a radar obstacle detector of Fig. 1;
Fig. 3 is a rear view of a radar obstacle detector of Fig. 1;
Fig. 4 is a side view of the radar obstacle detector of Fig. 1 including a schematic radar beam; and
Fig. 5 illustrates a railway crossing with the radar obstacle detector of Fig. 1 having a scanning zone substantially diagonal across a surveillance zone.

### Detailed Description

This disclosure generally relates to a radar obstacle detector for detection of objects at a railway crossing. The radar obstacle detector may have an optimal distribution of a radar beam across the railway crossing.

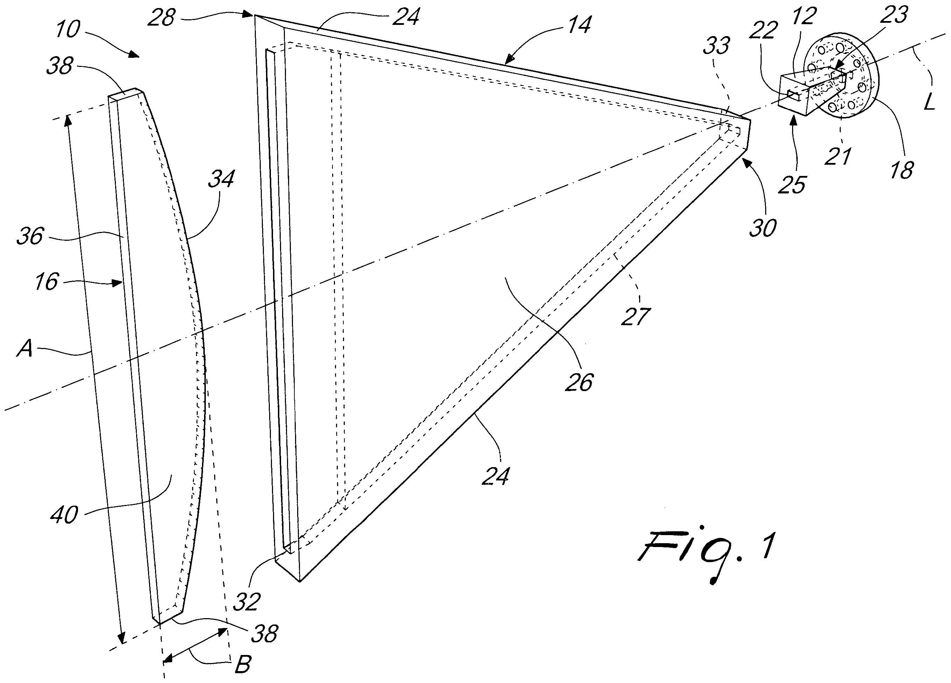

Fig. 1 illustrates a radar obstacle detector **10** comprising a waveguide **12,** a sectoral horn **14,** a dielectric insert **16.** The radar obstacle detector further comprises a transmitting element **15** (not shown). The radar obstacle detector **10** may further comprise a flange **18.** Radar obstacle detector **10** may be a fixed antenna.

With reference to Figs. 1 to 3, the waveguide **12** may have a first opening **20** and a second opening **22.** Waveguide **12** may be hollow and may have a wave guide cavity **21** extending between the first opening **20** and the second opening **22.** Radio signals may propagate through the waveguide cavity **21.**

The first opening **20** may be rectangular in cross section. First opening **20** may have a cross-sectional length of 3 mm to 4 mm. First opening **20** may have a cross-sectional length of 3.1 mm. First opening **20** may have a cross-sectional breadth of 1 mm to 2 mm. First opening **20** may have a cross-sectional breadth of 1.55 mm.

The second opening **22** may be rectangular in cross section. The radio signals may exit from the waveguide **12** through the second opening **22.** In an embodiment, second opening **22** may have a cross-sectional length of 95 mm to 105 mm. Second opening **20** may have a cross-sectional length of 100 mm. Second opening **20** may have a cross-sectional breadth of 8 mm to 9 mm. First opening **20** may have a cross-sectional breadth of 8.5 mm.

With reference to Fig. 1, the waveguide **12** may have a pyramidal shape. An end of the waveguide **12** may be truncated. The truncated end **23** may have the first opening **20.** The opposite end of the waveguide **12** may be a base **25** having the second opening **22.** Waveguide **12** may have an axial length of between 10 to 20 mm. Waveguide **12** may have an axial length of 10 mm. The axial length of the waveguide **12** may be longitudinally measured from the base **25** defining the second opening **22** to the truncated end **23** defining the first opening **20.**

The waveguide **12** may be made of an electrically conducting material. Waveguide **12** may be made of aluminum or a high-grade steel, or of a plastic coated with a conductive material. In an embodiment, the waveguide **12** may have a standard of WR12.

With reference to Fig. 1, sectoral horn **14** may be funnel shaped and may extend along a longitudinal axis L. Sectoral horn **14** may be hollow and may have a horn cavity **27.** Radio signals may propagate through the horn cavity **27.** Horn cavity 27 may extend from a first end 28 to a second end **30.** Sectoral horn **14** has flared sides **24** and parallel sides **26.** The flared sides **24** and parallel sides **26** delimit the horn cavity **27.**

The flared sides **24** lie on a plane. The flared sides **24** may lie on a plane that is parallel to the longitudinal axis **L** of the sectoral horn **14.** The flared sides **24** may increase in mutual distance along the longitudinal axis **L.** The flared sides **24** may increase in mutual distance from the first end **28** to the second end **30.**

The first end **28** may have a first aperture **32.** Radio signals may be emitted as a radar beam from the sectoral horn **14** through the first aperture **32.** The second end **30** may have a second aperture **33.** Radio signals may travel into the sectoral horn **14** through the second aperture **33.** The first aperture **32** may have a rectangular cross section. The first aperture **32** may be extended along the first end **28.** First aperture **32** may lie on a plane that is substantially perpendicular to the longitudinal axis of the sectoral horn **14.**

Sectoral horn **14** may be connected at the second end **30** to the base **25** of the waveguide **12.** The second aperture **33** may have dimensions that correspond to the dimensions of the second opening **22** of the waveguide **12.** Radio signals may travel from the waveguide cavity **21** through the second opening **22** and the second aperture **33** into the horn cavity **27.**

In an embodiment, the sectoral horn **14** and the waveguide **12** may be formed separately and subsequently connected. In an alternative embodiment, the sectoral horn **14** and the waveguide **12** may be formed as a monolithic structure.

Sectoral horn **14** may have an axial length of between 130 mm to 145 mm. Sectoral horn **14** may have an axial length of 140 mm. The axial length of the waveguide **12** may be measured longitudinally from the first end **28** defining the first aperture **32** to the second end **30** defining the second aperture **33.** The sectoral horn **14** may be made of an electrically conducting material. Sectoral horn **14** may be made of aluminum or a high-grade steel, or of a plastic coated with a conductive material. In an embodiment, the sectoral horn **14** may be made of aluminum having a film coating of silver.

Transmitter element **15** may be connected to an electronic unit that generates radio signals. Transmitter element **15** may couple the radio signals into the waveguide **12.** The transmitter element **15** may emit the radio signals in the form of microwaves through the waveguide **12.** In an embodiment, the radio signals may be in the form of continuous microwaves. The radio signals may be in the form of frequency modulated continuous microwaves.

The transmitter element **15** may be positioned in the waveguide **12.** The transmitting element **15** may be positioned through the first opening **20.** In an embodiment, the transmitter element **15** transmits a radio signal with a frequency of 76GHz.

The radar obstacle detector **10** may further comprise a receiver element (not shown) to receive reflected microwaves. The receiver element may be positioned in the waveguide **12.** The receiver element may be positioned through the first opening **20.** In an embodiment, the transmitting element **15** and the receiver element may be provided in a single module.

The dielectric insert **16** may have an arcuate edge **34** and a linear radiating edge **36.** The arcuate edge **34** may be smooth. In an embodiment, a series of notches may be provided on the arcuate edge **34.** The notches may be transverse to the direction of extension of the arcuate edge **34.** In an alternative embodiment, arcuate edge **34** may be serrated. A series of teeth may extend from the arcuate edge **34.**

The linear radiating edge **36** may be smooth. In an embodiment, a series of notches may be provided on the linear radiating edge **36.** The notches may be transverse to the direction of extension of the linear radiating edge **36.** In an alternative embodiment, linear radiating edge **36** may be serrated. A series of teeth may extend from the linear radiating edge **36.**

The dielectric insert **16** may be made of material having a dielectric constant of 2. The dielectric insert **16** may be made of polytetrafluoroethylene.

The arcuate edge **34** and the linear radiating edge **36** may be connected by transverse edges **38.** Transverse edges **38** may be orthogonal to the linear radiating edge **36.** Dielectric insert **16** may have sides **40.** Each side **40** may be bordered by the arcuate edge **34,** the linear radiating edge **36** and the transverse edges **38.**

Dielectric insert **16** may have a length **A** of 95 mm to 105 mm. Dielectric insert **16** may have a length **A** of 100 mm. Dielectric insert **16** may have a maximum height **B** of 13 mm to 14 mm. Dielectric insert **16** may have a maximum height **B** of 13.25 mm. Dielectric insert **16** may have a thickness of 2 mm to 3 mm. Dielectric insert **16** may have a thickness of 2.35 mm.

The dielectric insert **16** is inserted into the aperture **32** of the sectoral horn **14.** Dielectric insert **16** may fully fit into the aperture **32.** The dielectric insert **16** may be enclosed by walls of the aperture **32.** Transverse edges **38** and sides **40** may contact inner walls of the sectoral horn **14.**

The arcuate edge **34** and the linear radiating edge **36** may not contact the inner walls of the sectoral horn **14.** The arcuate edge **34** may face the waveguide **12.** The radio signal propagating through the horn cavity **27** may be received at the arcuate edge **34.** The linear radiating edge **36** may face away from the waveguide **12.**

The radio signal may radiate from the linear radiating edge **36.** The radio signal may radiate from the linear radiating edge **36** as a radar beam having a beam angle relative to the flared sides **24** of the sectoral horn **14.**

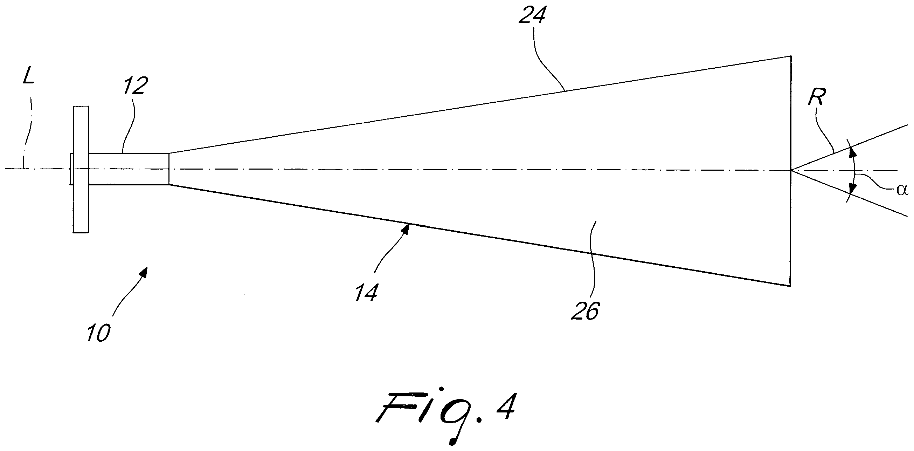

Fig. 4 illustrates a side view of the radar obstacle detector **10** from which a radar beam **R** is emitted. The radar beam **R** may have a beam angle **α**. The beam angle **α** may determine the beam height of the radar beam **R.** The beam angle **α** may determine the vertical coverage of the scanning beam over a vertical plane.

The beam angle **α** may be narrow. In an example, no longer forming part of the invention, the beam angle **α** may be between 6 to 0 degrees relative to the flared sides **24**. According to the invention,the beam angle **α** is between 5 to 2 degrees relative to the flared sides **24.** More preferably, the beam angle **α** may be 3 degrees relative to the flared sides **24.**

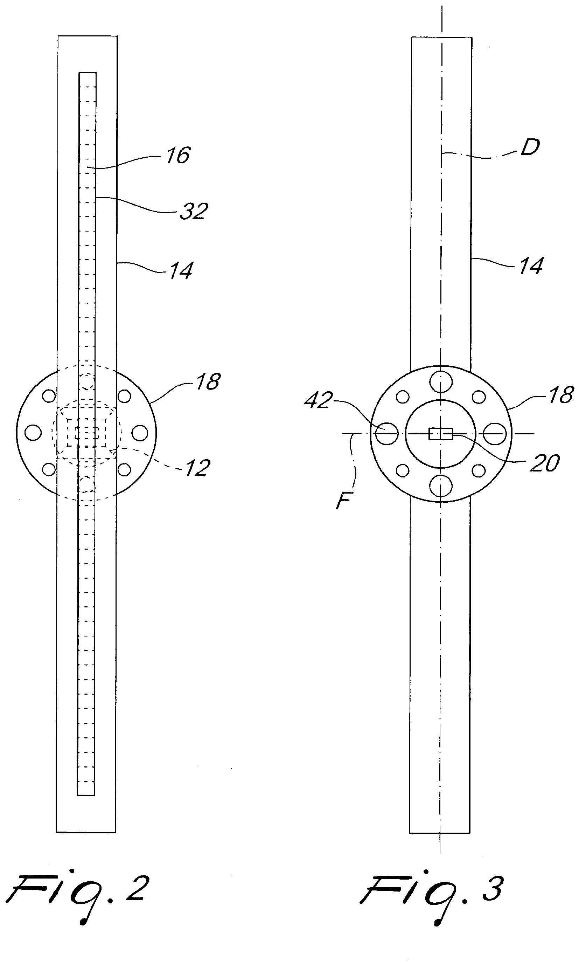

With reference to Fig. 3, radar obstacle **10** may have a vertical axis **D** and a horizontal axis **F.** The plane of the flared sides **24** may be parallel to the vertical axis **D.** The radar beam **R** may have a beam angle **α** between 6 to 0 degrees along the vertical axis **D.** According to the invention, the beam angle **α** is between 5 to 2 degrees along to the vertical axis **D.** More preferably, the beam angle **α** may be 3 degrees along to the vertical axis **D.**

The beam angle may determine the altitude coverage of the radar beam over a vertical plane. Reduction in the beam angle may increase the antenna gain of the radar obstacle detector **10.** The reduced beam angle may improve the directivity of the radar obstacle detector **10** for a given radiation efficiency.

The narrow beam angle may be further defined as a beam angle with a divergent angle between 3 to 0 degrees from the longitudinal axis **L.** Preferably, the beam angle may be between 2.5 to 1 degrees from the longitudinal axis **L.** More preferably, the beam angle may be 1 degree from the longitudinal axis **L.**

The radar obstacle detector **10** may have a scanning range. The scanning range may be the distance from the radar obstacle detector **10** within which an object may be detected. The scanning range of the radar obstacle detector **10** may extend across an observation area.

With reference to Fig. 3, the flange **18** may act as a mounting for the radar obstacle detector **10.** The flange **18** may be mounted by bolts (not shown). The flange **18** may be mounted to a support such as a upright pole. Flange **18** may be metallic. Flange **18** may be provided with a plurality of bores **42.** The bores **42** may serve to receive screws through which the radar obstacle detector **10** may be attached to the support. The bores **42** may correspond to bores provided in the support.

The flange **18** may be positioned on the waveguide **12.** Flange **18** may be formed monolithically with the waveguide **12.** Flange **18** may have a diameter of 19 mm to 20 mm. Flange **18** may have a diameter of 19.05 mm.

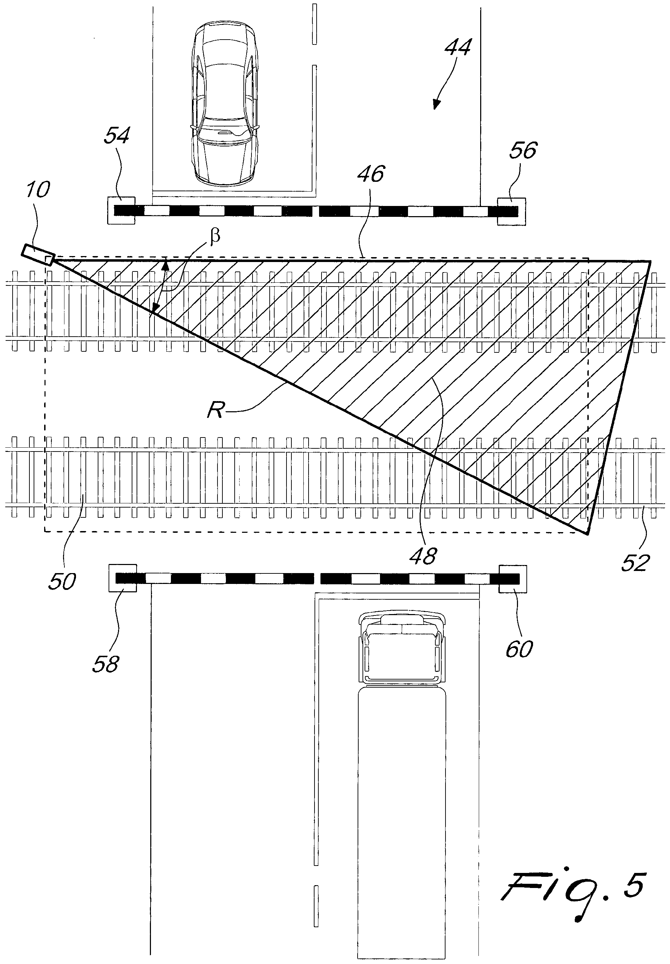

Fig. 5 illustrates a plan view of the radar obstacle detector **10** located at a railway crossing **44.** The railway crossing **44** may be positioned at an exit to a tunnel or at an entrance to a tunnel. The railway crossing **44** may have tracks **50, 52.** Barriers **54, 56, 58, 60** may secure the railway crossing **44** from entry of vehicles from crossing the rail tracks **50, 52** prior to the passage of a train. Barriers **54, 56, 58, 60** may be lowered prior to arrival of the train and raised after the departure of the train. Barriers **54, 56, 58, 60** may be controlled by a barrier control system that may communicate with the radar obstacle detector **10.**

The radar obstacle detector **10** may detect objects at the railway crossing **44.** The radar obstacle detector **10** may be positioned at the railway crossing **44** to detect objects in surveillance area **46.** Radar obstacle detector **10** may be positioned at a height of approximately 1 meter. Radar obstacle detector **10** may be positioned at a height of approximately 1 meter from the rail tracks **50, 52.**

The radar beam **R** may have an aperture angle. The beam aperture angle **β** may determine the beam width of the radar beam **R.** The beam aperture angle **β** may determine the horizontal coverage of the scanning beam over a horizontal plane.

Beam aperture angle β may be wide. The beam aperture angle **β** is between 20 to 35 degrees in a plane orthogonal to the plane of the flared sides **24.** Preferably, the beam aperture angle **β** may be between 25 to 30 degrees in a plane orthogonal to the plane of the flared sides **24.** More preferably, the beam aperture angle **β** may be 30 degrees in a plane orthogonal to the plane of the flared sides **24.**

The radar beam **R** may have a beam aperture angle **β** may be between 25 to 35 degrees along the horizontal axis **F.** Preferably, the beam aperture angle **β** may be between 25 to 30 degrees along to the horizontal axis **F.** More preferably, the beam aperture angle **β** may be 30 degrees along the horizontal axis **F.**

Radar obstacle detector **10** may have a scanning zone **48.** The scanning zone **48** may be determined by the scanning range, the beam aperture angle β and the beam angle α of the radar obstacle detector **10.** The scanning zone **48** may extend across a surveillance area **46.** The radar obstacle detector **10** may be suitably positioned so that the scanning zone **48** may provide adequate coverage of the surveillance area **46.** The radar obstacle detector **10** may be suitably orientated so that the scanning zone **48** may provide adequate coverage of the surveillance area **46.** In an embodiment, a plurality of radar obstacle detectors **10** may be position at the surveillance area **46.**

The skilled person would appreciate that foregoing embodiments may be modified or combined to obtain the radar obstacle detector **10** of the present disclosure.

### Industrial Applicability

This disclosure describes a radar obstacle detector **10** for scanning a crossing area at a railway crossing. The radar obstacle detector **10** may detect the presence of an object on or at the vicinity of the tracks. Upon detection of an object, a detection system comprising the radar obstacle detector **10** may signal the approaching train to stop. The system may signal the approaching train to stop if the surveillance zone is occupied by an object of a minimum specified size.

The radar obstacle detector **10** may have a narrow beam in the plane of the flared sides of the sectoral horn. The radar obstacle detector **10** may have a wide beam in the plane of the parallel sides of the sectoral horn.

The narrow beam may avoid directing the radar beam at the ground so as to prevent false detections. The narrow beam may also avoid directing the radar beam at a level high above the ground so as to prevent unnecessary beam transmissions. The radar beam may emit the narrow beam while having a practical length of a standard horn.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims.

## Claims

1. A railway crossing radar obstacle detector (10), the railway crossing radar obstacle detector (10) comprising:
a waveguide (12);
a transmitting element (15) for emitting microwaves, the transmitting element (15) being positioned in the waveguide (12) wherein the transmitting element (15) transmits a radio signal with a frequency of 76GHz;
a sectoral horn (14) coupled to the waveguide (12), wherein the sectoral horn (14) is configured to radiate a radar beam (R) having an angle (α) of 5 to 2 degrees in the plane of flared sides (24) and having a beam aperture angle (β) of 20 to 35 degrees in a plane orthogonal to the plane of the flared sides (24); and
a dielectric insert (16) inserted into a first aperture (32) of the sectoral horn (14).

2. The railway crossing radar obstacle detector (10) of claim 1 wherein radar beam (R) has an angle (α) of 3 degrees in the plane of the flared sides (24).

3. The railway crossing radar obstacle detector (10) of claims 1 or 2 wherein radar beam (R) has a beam aperture angle (β) of 30 degrees in a plane orthogonal to the plane of the flared sides (24).

4. The railway crossing radar obstacle detector (10) of any one of preceding claims wherein the dielectric insert (16) is made of polytetrafluoroethylene.

5. The railway crossing radar obstacle detector (10) of any one of preceding claims wherein the dielectric insert has a dielectric constant of 2.

6. The railway crossing radar obstacle detector (10) of any one of preceding claims wherein the dielectric insert (16) has an arcuate edge (34) facing the waveguide (12) for receiving the microwaves.

7. The railway crossing radar obstacle detector (10) of any one of preceding claims wherein the dielectric insert (16) has a linear radiating edge (36) facing away from the wave guide (12) for radiating the radar beam.

8. The railway crossing radar obstacle detector (10) of any one of preceding claims wherein the microwaves are frequency modulated continuous microwaves.

9. The railway crossing radar obstacle detector (10) of any one of preceding claims wherein the waveguide (12) has a truncated pyramidal shape.

10. The railway crossing radar obstacle detector (10) of any one of preceding claims wherein the waveguide (12) has a first and a second opening (20, 22) wherein the transmitting element (15) is positioned through the first opening (20) and the sectoral horn (14) is coupled at the second opening (22).

11. The railway crossing radar obstacle detector (10) of claim 10 comprising a receiver element positioned in the wave guide (12) through the first opening (20).

12. The railway crossing radar obstacle detector (10) of any one of preceding claims wherein the waveguide (12) has a standard of WR12.

## Patentansprüche

1. Ein Radarhindernisdetektor (10) für eine Schienenkreuzung, wobei der Radarhindernisdetektor (10) für die Schienenkreuzung Folgendes umfasst:
einen Wellenleiter (12);
ein Übertragungselement (15) zum Senden von Mikrowellen, wobei das Übertragungselement (15) im Wellenleiter (12) positioniert ist, wobei das Übertragungselement (15) ein Funksignal mit einer Frequenz von 76GHz aussendet;
ein mit dem Wellenleiter (12) gekoppeltes Sektor-Horn (14), wobei das Sektor-Horn (14) konfiguriert ist, um einen Radarstrahl (R) mit einem Winkel (α) von 5 bis 2 Grad in der Ebene aufgeweiteter Seiten (24) und einem Strahlenöffnungswinkel (β) von 20 bis 35 Grad in einer Ebene senkrecht zur Ebene aufgeweiteter Seiten (24) auszusenden; und
ein dielektrisches Einsatzteil (16), eingesetzt in eine erste Öffnung (32) des Sektor-Horns (14).

2. Der Radarhindernisdetektor (10) für eine Schienenkreuzung gemäß Anspruch 1, wobei der Radarstrahl (R) einen Winkel (α) von 3 Grad in der Ebene der aufgeweiteten Seiten (24) hat.

3. Der Radarhindernisdetektor (10) für eine Schienenkreuzung gemäß Anspruch 1 oder 2, wobei der Radarstrahl (R) einen Strahlenöffnungswinkel (β) von 30 Grad in einer Ebene senkrecht zur Ebene der aufgeweiteten Seiten (24) hat.

4. Der Radarhindernisdetektor (10) für eine Schienenkreuzung gemäß einem beliebigen der obigen Ansprüche, wobei das dielektrische Einsatzteil (16) aus Polytetrafluorethylen besteht.

5. Der Radarhindernisdetektor (10) für eine Schienenkreuzung gemäß einem beliebigen der obigen Ansprüche, wobei das dielektrische Einsatzteil eine Dielektrizitätskonstante von 2 hat.

6. Der Radarhindernisdetektor (10) für eine Schienenkreuzung gemäß einem beliebigen der obigen Ansprüche, wobei das dielektrische Einsatzteil (16) eine bogenförmige Kante (34) hat, die dem Wellenleiter (12) zugewandt ist, um die Mikrowellen zu empfangen.

7. Der Radarhindernisdetektor (10) für eine Schienenkreuzung gemäß einem beliebigen der obigen Ansprüche, wobei das dielektrische Einsatzteil (16) eine lineare abstrahlende Kante (36) hat, die vom Wellenleiter (12) abgewandt ist, um den Radarstrahl auszusenden.

8. Der Radarhindernisdetektor (10) für eine Schienenkreuzung gemäß einem beliebigen der obigen Ansprüche, wobei die Mikrowellen frequenzmodulierte Dauermikrowellen sind.

9. Der Radarhindernisdetektor (10) für eine Schienenkreuzung gemäß einem beliebigen der obigen Ansprüche, wobei der Wellenleiter (12) eine Pyramidenstumpfform hat.

10. Der Radarhindernisdetektor (10) für eine Schienenkreuzung gemäß einem beliebigen der obigen Ansprüche, wobei der Wellenleiter (12) eine erste und eine zweite Öffnung (20, 22) hat, wobei das Übertragungselement (15) durch die erste Öffnung (20) positioniert wird und das Sektor-Horn (14) an der zweiten Öffnung (22) angeschlossen ist.

11. Der Radarhindernisdetektor (10) für eine Schienenkreuzung gemäß Anspruch 10, der ein Empfängerelement umfasst, das durch die erste Öffnung (20) in den Wellenleiter positioniert wird.

12. Der Radarhindernisdetektor (10) für eine Schienenkreuzung gemäß einem beliebigen der obigen Ansprüche, wobei der Wellenleiter (12) einen Standard von WR12 hat.

## Revendications

1. Détecteur d'obstacles radar pour passage à niveau (10), le détecteur d'obstacles radar pour passage à niveau (10) comprenant :
un guide d'ondes (12) ;
un élément émetteur (15) pour émettre des micro-ondes, l'élément émetteur (15) étant positionné dans le guide d'ondes (12), dans lequel l'élément émetteur (15) émet un signal radio avec une fréquence de 76 GHz ;
un cornet sectoriel (14) couplé au guide d'ondes (12), dans lequel le cornet sectoriel (14) est configuré pour émettre un faisceau radar (R) ayant un angle (α) de 5 à 2 degrés dans le plan de côtés évasés (24) et ayant un angle d'ouverture de faisceau (β) de 20 à 35 degrés dans un plan orthogonal au plan des côtés évasés (24) ; et
un insert diélectrique (16) inséré dans une première ouverture (32) du cornet sectoriel (14).

2. Détecteur d'obstacles radar pour passage à niveau (10) selon la revendication 1, dans lequel le faisceau radar (R) a un angle (α) de 3 degrés dans le plan des côtés évasés (24).

3. Détecteur d'obstacles radar pour passage à niveau (10) selon la revendication 1 ou 2, dans lequel le faisceau radar (R) a un angle d'ouverture de faisceau (β) de 30 degrés dans un plan orthogonal au plan des côtés évasés (24).

4. Détecteur d'obstacles radar pour passage à niveau (10) selon l'une quelconque des revendications précédentes, dans lequel l'insert diélectrique (16) est en polytétrafluoroéthylène.

5. Détecteur d'obstacles radar pour passage à niveau (10) selon l'une quelconque des revendications précédentes, dans lequel l'insert diélectrique a une constante diélectrique égale à 2.

6. Détecteur d'obstacles radar pour passage à niveau (10) selon l'une quelconque des revendications précédentes, dans lequel l'insert diélectrique (16) a un bord arqué (34) faisant face au guide d'ondes (12) pour recevoir les micro-ondes.

7. Détecteur d'obstacles radar pour passage à niveau (10) selon l'une quelconque des revendications précédentes, dans lequel l'insert diélectrique (16) a un bord rayonnant linéaire (36) à l'opposé du guide d'ondes (12) pour émettre le faisceau radar.

8. Détecteur d'obstacles radar pour passage à niveau (10) selon l'une quelconque des revendications précédentes, dans lequel les micro-ondes sont des micro-ondes continues modulées en fréquence.

9. Détecteur d'obstacles radar pour passage à niveau (10) selon l'une quelconque des revendications précédentes, dans lequel le guide d'ondes (12) a une forme pyramidale tronquée.

10. Détecteur d'obstacles radar pour passage à niveau (10) selon l'une quelconque des revendications précédentes, dans lequel le guide d'ondes (12) a une première et une deuxième ouverture (20, 22), dans lequel l'élément émetteur (15) est positionné dans la première ouverture (20) et le cornet sectoriel (14) est accouplé au niveau de la deuxième ouverture (22).

11. Détecteur d'obstacles radar pour passage à niveau (10) selon la revendication 10, comprenant un élément récepteur positionné dans le guide d'ondes (12) à travers la première ouverture (20).

12. Détecteur d'obstacles radar pour passage à niveau (10) selon l'une quelconque des revendications précédentes, dans lequel le guide d'ondes (12) a une norme de WR12.
